# EUROPEAN PATENT APPLICATION

(11) **EP 0 849 925 A1**
(43) Date of publication of application: **24.06.1998**
(21) Application number: 96309207.7
(22) Date of filing: 17.12.1996
(51) Int. Cl.: H04M 3/50, H04N 1/32

(54) **Enhanced message centre**

(71) Applicant: ICO Services Ltd., London W6 9BN (GB)
(72) Inventor: Goerke, Thomas, Middlesex HA7 3PN (GB)
(74) Representative: Geary, Stuart Lloyd

(57) **Abstract**

**Communication Apparatus with Text-to-Speech Capability**
An enhanced message centre for a telephone network comprises a connection (21) to the Internet, a connection (22) to the PSTN, a PSTN interface unit (23) coupled to the connection (22) to the PSTN, a character recognition unit (24) coupled to receive an output of the PSTN interface unit (23), a language recognition unit (25) coupled to receive a text signal (26) and a writing system signal (27) from the character recognition unit (24) and e-mail text data from the Internet connection (21), a text-to-speech unit (28) coupled to receive a text signal (29) and a language signal (30) from the language recognition unit (25), and a storage unit (30) coupled to receive speech data from the text-to-speech unit (28) and an output of the PSTN interface unit (23). The storage unit (30) is provided with a link to a satellite mobile telephone system, illustrated by a SAN (4), a satellite (6) and a UT (7). A machine translation unit may also be provided.

## Description

The present invention relates to an enhanced message centre.

Telephone systems suffer from the problem that a subscriber is not always available to answer a call. One solution to this problem is the use of the now ubiquitous telephone answering machine.

This, however, does not provide a solution in the case of mobile telephone systems where the unavailability of a subscriber is often linked to the lack of an open channel between the mobile telephone network and a mobile telephone. For instance, the mobile telephone may be switched off or may be located out of range of any of the network's base stations. One solution to this second problem is to effectively move the telephone answering machine from the subscriber's terminal into the networks control system. Thus, if a subscriber cannot be reached, the calling party can leave a voice message which can be retrieved later by the called party. Such a system is not, of course, limited to mobile telephone systems in its application.

It has also been proposed that e-mail messages be converted into speech for delivery to a subscriber using a simple telephone in a manner similar to the afore-mentioned voice messages.

The present invention provides an extension of these message handling systems to include facsimile transmissions and introduces linguistic functions, e.g. automatic or user selected translation of messages.

According to a first aspect of the present invention, there is provided a message processing apparatus for storing voice mail messages in a telephone system, the message processing apparatus comprising identifying means to identify an incoming signal as a facsimile transmission, means responsive to the identifying means to store the incoming signal, character recognition means for converting writing represented by the incoming signal into a text file, and text-to-speech processing means for converting the text file into speech data and storing the speech data as a voice mail message.

Preferably, an apparatus according to the present invention includes translation means for translating the text in said text file from a first language to a second language. More preferably, means are provided whereby a subscriber can select a language to be the second language. Conveniently, means is provided to identify said first language on the basis of the incoming signal and/or the text file. The language identification may employ both image processing and linguistic analysis techniques.

Conveniently, an apparatus according to the present invention includes means for receiving e-mail, means for converting the received e-mail into a text file suitable for processing by the text-to-speech processing means.

According to a second aspect of the present invention, there is provided a message processing apparatus for storing voice mail messages in a telephone system, the message processing apparatus comprising translation means for translating text from a first language to a second language. The apparatus may be adapted to translate e-mail messages.

Embodiments of the present invention will now be described, by way of example, with reference to the accompanying drawings, in which:
Figure 1 shows the general form of a communications system according to the present invention;
Figure 2 is a block diagram of a first embodiment of an enhanced message centre according to the present invention;
Figure 3 is a block diagram of the PSTN interface unit of Figure 2;
Figure 4 is a block diagram of the character recognition unit of Figure 2;
Figure 5 is a block diagram of the language recognition unit of Figure 2;
Figure 6 is a block diagram of the text-to-speech unit of Figure 2; and
Figure 7 is a block diagram of a second embodiment of an enhanced message centre according to the present invention.

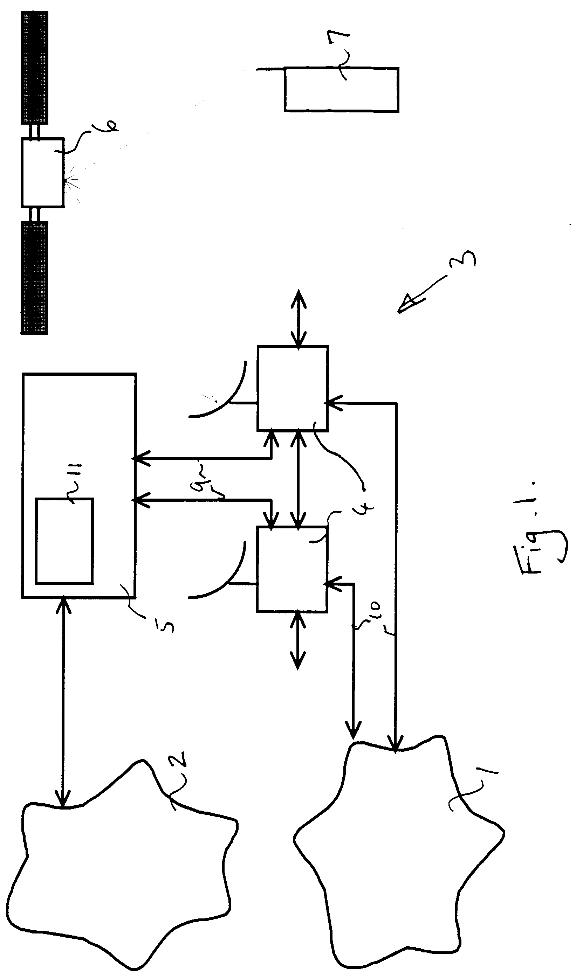

Referring to Figure 1, a communications system includes the public switched telephone network (PSTN) 1, which for present purposes may be considered to include both fixed and cellular mobile telephones, the Internet 2 and a satellite mobile telephone system 3. The satellite mobile telephone system 3 includes a plurality of satellite access nodes (SAN) 4, a control centre 5, a plurality of satellites 6 (one shown) and a plurality of mobile telephones (UT) 7 (one shown). The SANs 4 are interconnected by a high speed data link 8. The SANs 4 are also connected to the control centre 5 and to the PSTN 1 by high speed data links 9, 10. The control centre 5 is connected to the Internet 2. The SANs 4 communicate with UTs 7 via the satellites 6.

The control centre 5 includes a message centre 11. The message centre 11 provides voice messaging and e-mail text-to-speech messaging as known in the state of the art. However, it also provides enhancements to these services. These enhancements will now be described.

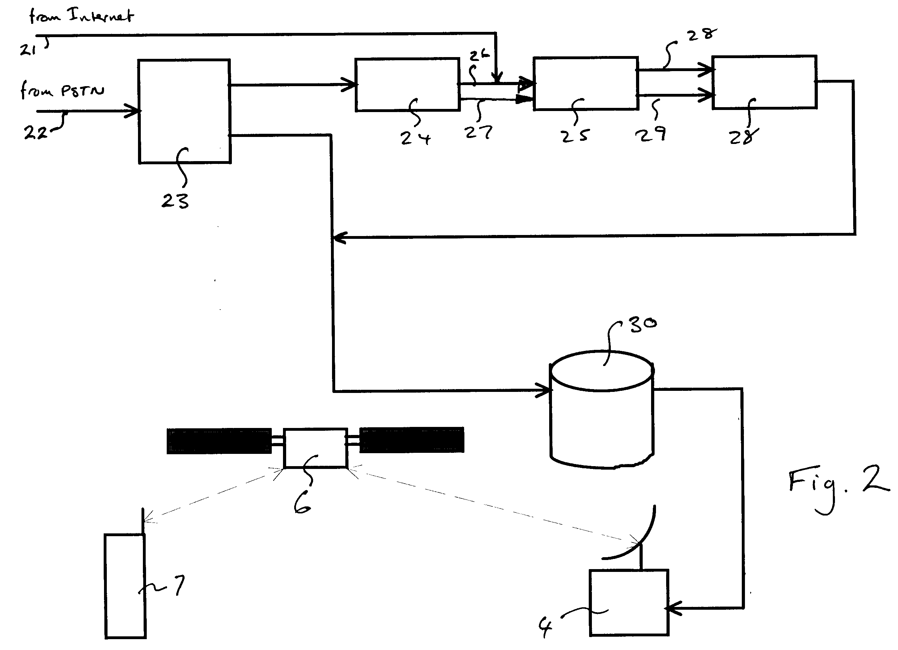

Referring to Figure 2, the message centre 11 comprises a connection 21 to the Internet, a connection 22 to the PSTN, a PSTN interface unit 23 coupled to the connection 22 to the PSTN, a character recognition unit 24 coupled to receive an output of the PSTN interface unit 23, a language recognition unit 25 coupled to receive a text signal 26 and a writing system signal 27 from the character recognition unit 24 and e-mail text data from the Internet connection 21, a text-to-speech unit 28 coupled to receive a text signal 29 and a language signal 30 from the language recognition unit 25, and a storage unit 30 coupled to receive speech data from the text-to-speech unit 28 and an output of the PSTN interface unit 23. The storage unit 30 is provided with a link to a satellite mobile telephone system, illustrated by a SAN 4, a satellite 6 and a UT 7.

When a UT cannot be reached, calls and e-mail are redirected to the message centre 11. Calls from the PSTN 1 are applied to the PSTN interface unit 23 which determines whether a call comprises speech or facsimile data. If the call comprises speech, the received speech is output to the storage unit 30. If, on the other hand, the received signal is a facsimile transmission, the facsimile data is passed on to the character recognition unit 24. The character recognition unit 24 analyses the facsimile data to determine whether it contains text. In determining whether the facsimile signal contains text, the character recognition unit 24 applies various templates representing different writing systems, e.g. Roman alphabet, Cyrillic alphabet, Chinese characters, Japanese (Kanji, Hiragana and Katakana) or Korean (Hangul). Once, a writing system is identified, the character recognition generates character data comprising codes for the characters recognised in the facsimile data signal. The character data signal is output together with a data indicating the identified writing system.

The character data signal and the writing system data signals are applied to language recognition unit 25. The language recognition unit 25, identifies the language of text represented by the character data signal with reference to the writing system signal. Once, the language has been identified, the language recognition unit outputs the character data signal and a language signal to the text-to-speech 28.

The text-to-speech unit 28 generates an encoded speech signal from the character data signal in accordance with the language signal. The encode speech signal is output to the storage unit 30 where it is stored. The encoded speech signal is in the form used by the satellite mobile telephone system for ordinary transmission of speech between subscribers.

When a UT 7 registers with the satellite mobile telephone network, the message centre 11 is notified and, if there are messages waiting from the UT 7, the message centre 11 calls the UT 7 to inform the user that there are messages waiting. If the user wishes to hear his messages, he responds by entering a predetermined key sequence which causes a command code to be sent back to the message centre 11. The message centre 11 then retrieves the encoded speech signals from the storage unit 30 and sends them to the UT 7.

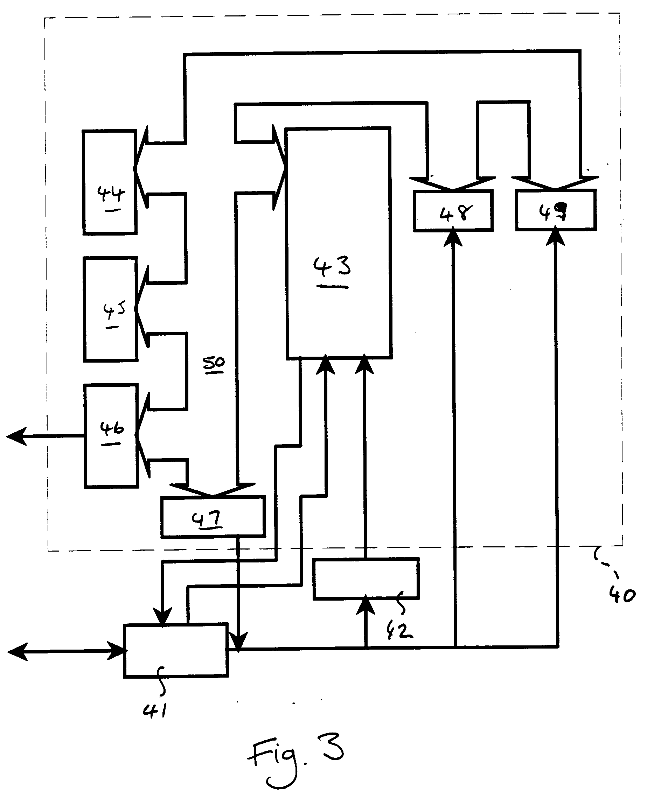

Referring to Figure 3, the PSTN interface unit 23 comprises a microcomputer sub-system 40, a "ring detector" and "hook" simulating circuit 41 for detecting incoming calls and signalling that connection has been established, and a dual tone multi-frequency (DTMF) decoder 42. The microcomputer sub-system 40 comprises a microprocessor 43, a random-access memory (RAM) 44, a read-only memory (ROM) 45, a local network interface circuit 46, a digital-to-analogue converter (DAC) 47, a fax-modem circuit 48 and an analogue-to-digital converter (ADC) 49. The components of the microcomputer sub-system 40 are interconnected by address and data bus 50.

When an incoming call is detected by the simulating circuit 41, the simulating circuit 41 applies a signal to an interrupt port of the microprocessor 43. In response to this, the microprocessor 43 issues an "off hook" command to the simulating circuit 41 which then signals back to the PSTN that the call has been connected. Then the microprocessor 41 reads speech data from the ROM 45 and sends it to the DAC 47. The DAC 47 outputs an analogue speech signal to the line from the PSTN. The speech signal comprises the message "If you wish to leave a voice mail message, press gate(#)".

If the calling party is making a speech call, he will hear the message and either press the # key on his telephone or hang up. The microprocessor 43 monitors the output of the DTMF decoder 42 for a short period, e.g. 5 sec. If a # signal is received in this period, the microprocessor 43 decides that a voice mail message is to be left and begins to read data from the ADC 48. The data read from the ADC 48 is encoded by the microprocessor 43 to compress it and stored in the RAM 44. After 20 seconds, the microcomputer 43 issues an "on hook" command to the circuit 41 which signals to the PSTN that the connection has been terminated. The encoded speech data is read from the RAM 44 and sent via the network interface circuit 46 to the storage unit 30 (Figure 2) for storage as conventional voice mail.

If on the other hand, a # signal is not received, the microprocessor 43 instructs the fax-modem circuit 49 to send fax negotiating signals to the PSTN. If a facsimile machine is making the call, it will respond and start to transmit facsimile signals. If no response is received by the fax-modem circuit 49 within 10 seconds, microprocessor 43 sends the "on hook" command to the circuit 41.

Received fax signals are decoded by the fax-modem circuit 49 and read by the microprocessor 43 which stores them in a TIFF file in the RAM 44. When all of the fax data has been received, microcomputer 43 sends the "on hook" command to the circuit 41 and sends the TIFF file to a network storage device that can be accessed by the character recognition unit 24 (Figure 2), via the network interface circuit 46.

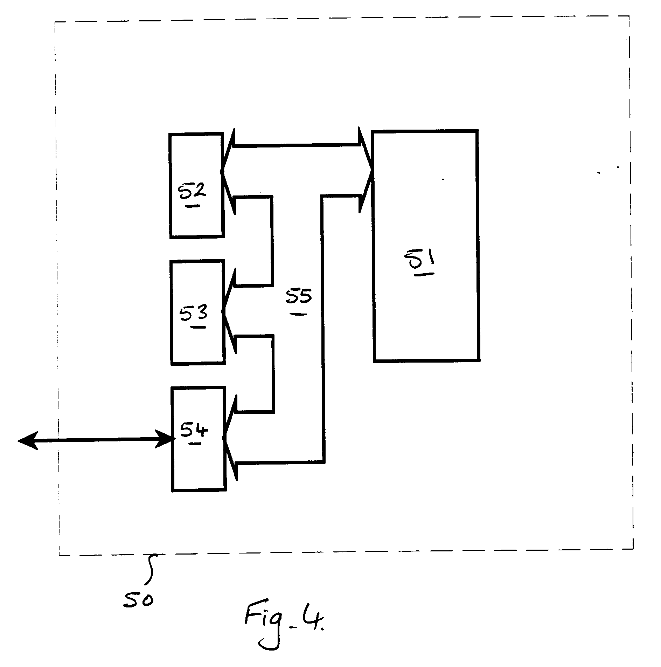

Referring to Figure 4, the character recognition unit 24 comprises a conventional microcomputer 50. The microcomputer 50 itself comprises a microprocessor 51, a RAM 52, a ROM 53, a local network interface 54 and an address and data bus 55, interconnection the microcomputer 50, the RAM 51, the ROM 52 and the local network interface 54.

When character recognition is to be carried out, the microcomputer 50 retrieves a TIFF file from the network storage device and stores it in the RAM 52. The writing system used for the facsimile represented by the TIFF file must first be determined. A suitable method of writing system identification is disclosed in "Script Determination in Document Images", Spitz, A.L., SPIE, vol. 2422, pp. 293-301.

Once the writing system has been identified, the microcomputer 50 processes the TIFF file according to the appropriate programme to produce a text file. The text file contains a header identifying the writing system used and codes representing the text in the facsimile. The text file is then sent to the network storage device by the microcomputer 50 via the local network interface 54.

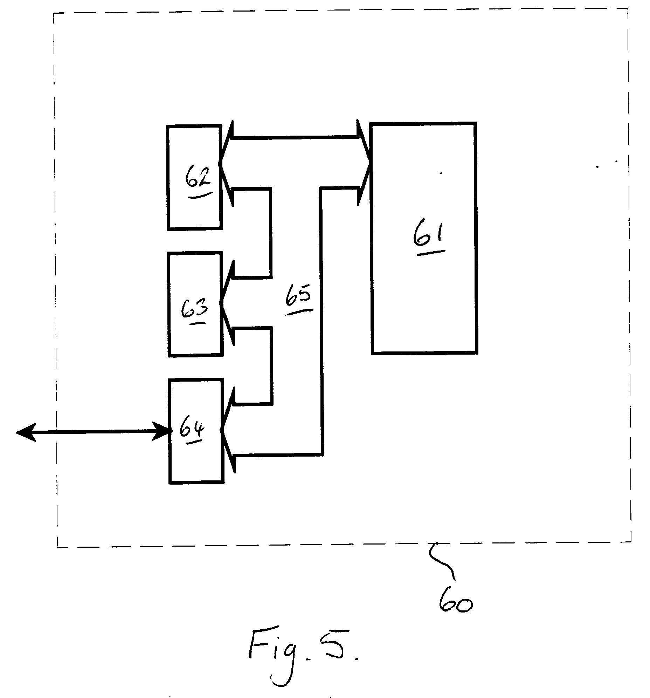

Referring to Figure 5, the language recognition unit 25 comprises a conventional microcomputer 60. The microcomputer 60 itself comprises a microprocessor 61, a RAM 62, a ROM 63, a local network interface 64 and an address and data bus 65, interconnection the microcomputer 60, the RAM 61, the ROM 62 and the local network interface 64.

When language recognition is to be carried out the microcomputer 60 retrieves the text file, stored by the character recognition unit 24, from the network storage device. The microcomputer 60 reads the text file's header. There are three possible relationships between the header and the language of the text. In the first case, the language is inherently, uniquely identified by the writing system, e.g. Japanese or Korean. In the second case, a language cannot be identified by the writing system, even with reference to the text as is the case with Chinese characters. In this second case, a decision must be made to use a particular language, for instance Cantonese or Mandarin, as a default. In the third case, the language cannot be identified from the header alone. However, it can be identified from analysis of the text. Typical examples are the Roman and Cyrillic alphabets.

In the first two cases, the microcomputer 60 merely restores the retrieved file in the network storage device. In the third case, the microcomputer 60 analyses the text using letter frequency tables or by identifying characteristic characters or character groups to identify the language of the text. Once a decision regarding the language of the text has been made, the retrieved file is stored in the network storage device with a new header identifying a language.

The language recognition unit 25 also processes e-mail messages. E-mail message files are retrieved from the network storage device. The microprocessor 60 then analyses the text on the assumption that the writing system used is the Roman alphabet. Once a decision regarding the language has been made, the e-mail message is stored in the network storage device with a header indicating the language determined to be being used.

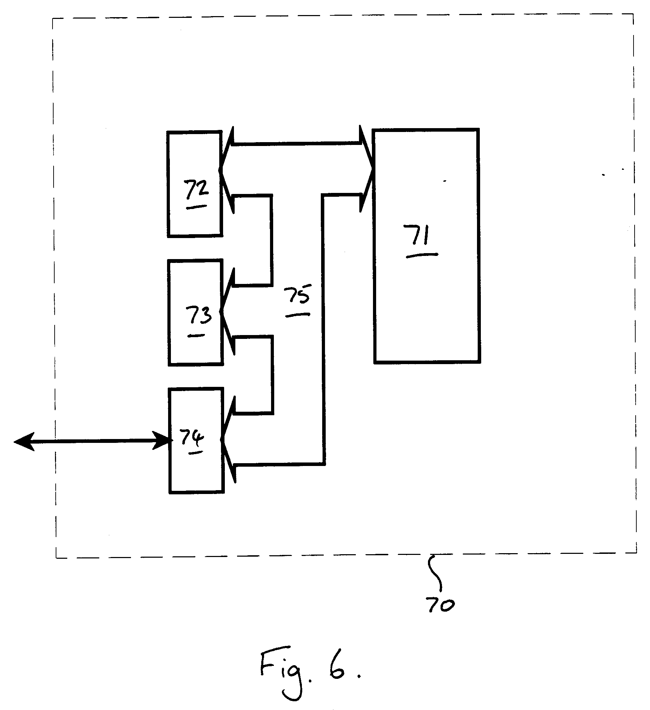

Referring to Figure 6, the text-to-speech unit 28 comprises a conventional microcomputer 70. The microcomputer 70 itself comprises a microprocessor 71, a RAM 72, a ROM 73, a local network interface 74 and an address and data bus 75, interconnection the microcomputer 70, the RAM 71, the ROM 72 and the local network interface 74.

When text-to-speech conversion is to be carried out, the microcomputer 70 retrieves a file which has been stored on the network storage unit by the language recognition unit 25. The microcomputer 70 then performs a text-to-speech operation using an appropriate program selected on the basis of the file's header. The speech data so produced is then coded to compress it. The coded speech is then sent to the storage unit 30 for later transmission to a UT 7.

In the foregoing description, the language of a message is determined solely from the characteristics of the message itself. However, additional information such as the geographical source of a message may be used to assist in identifying a language.

A second embodiment of the present invention provides a machine translation function and will now be described.

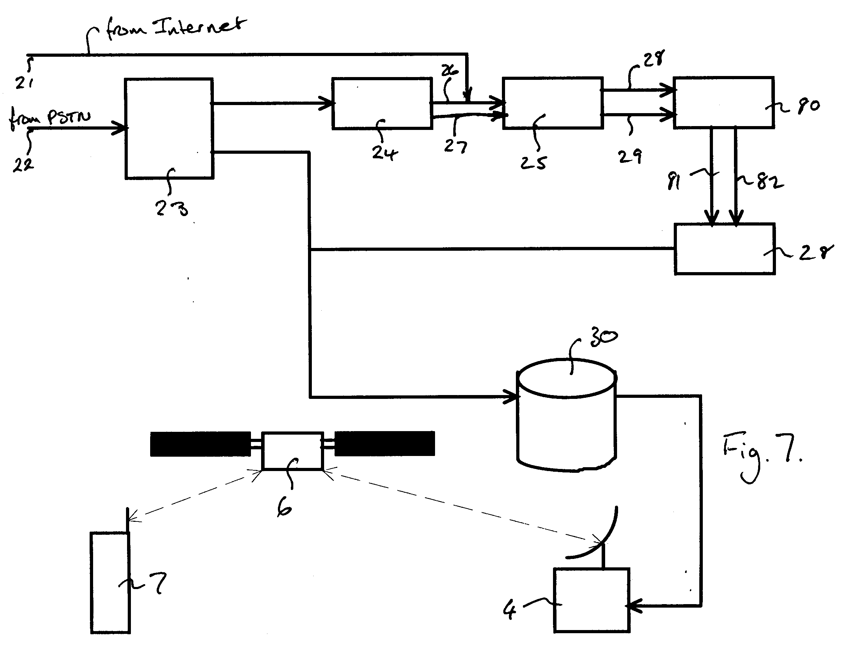

Referring to Figure 7, the second embodiment of an enhanced message centre according to the present invention is substantially the same as that shown in Figure 1, save for the addition of a translation unit 80.

The translation unit 80 retrieves text files from the network storage device and, if necessary, translates the text into a language selected by the addressee. The preferred language is selected from a menu displayed on the UT 7 during a messaging set up procedure. Once the translation unit 80 has performed the necessary processing, the resultant text 81 and language identification data 81 are stored in a file in the network storage device for retrieval by the text-to-speech unit 28.

Since incoming facsimile messages all pass through a text phase, the filtering arrangements available in e-mail systems may be employed.

I will be appreciated that the translation facility of the second embodiment may be applied to an e-mail only system, e.g. a system as shown in Figure 7 but lacking the PSTN interface unit 23 and the character recognition unit 24.

It will be appreciated that the present invention may be embodied using a single microcomputer to perform the functions of the PSTN interface unit 23, the character recognition unit 24, the language recognition unit 25, the text-to-speech unit 28 and, if used, the translation unit 80.

## Claims

1. A message processing apparatus for storing voice mail messages in a telephone system, the message processing apparatus comprising identifying means to identify an incoming signal as a facsimile transmission, means responsive to the identifying means to store the incoming signal, character recognition means for converting writing represented by the incoming signal into a text file, and text-to-speech processing means for converting the text file into speech data and storing the speech data as a voice mail message.

2. A message processing systems according to claim 1, including translation means for translating the text in said text file from a first language to a second language.

3. An apparatus according to claim 2, including means whereby a subscriber can select a language to be the second language.

4. An apparatus according to claim 2 or 3, including means to identify said first language on the basis of the incoming signal or said text file.

5. An apparatus according to any preceding claim, including means for receiving e-mail, means for converting the received e-mail into a text file suitable for processing by the text-to-speech processing means.

6. A message processing apparatus for storing voice mail messages in a telephone system, the message processing apparatus comprising translation means for translating text from a first language to a second language.

7. An apparatus according to claim 6, including means to receive e-mail, wherein the translation means is operable to translate a received e-mail message.
